Europäisches Patentamt

European Patent Office

Office européen des brevets

(11) Numéro de publication:

**0 152 711**
A2

## (12) DEMANDE DE BREVET EUROPEEN

(21) Numéro de dépôt: 84402463.8

(22) Date de dépôt: 30.11.84

(51) Int. Cl.⁴: **B 01 D 23/10**, B 01 D 23/24

(30) Priorité: 30.11.83 FR 8319150

(43) Date de publication de la demande: 28.08.85
Bulletin 85/35

(84) Etats contractants désignés: **AT BE CH DE FR GB IT LI LU NL SE**

(71) Demandeur: **MORNEX Limited, P.O. Box 53 161/166 Fleet Street, Londres EC4A 2HB (GB)**

(72) Inventeur: **Elmaleh, Samuel, Les Olivettes 14 Clapiers, F-34170 Castelnau le Lez (FR)**

(74) Mandataire: **Jolly, Jean-Pierre et al, Cabinet BROT et JOLLY 83, rue d'Amsterdam, F-75008 Paris (FR)**

(54) Procédé de concentration d'une suspension de particules microscopiques, dispositif pour la mise en oeuvre de ce procédé et applications de celui-ci.

(57) Selon l'invention, l'enceinte (1) contient un matériau granulaire (4) de masse spécifique inférieure, respectivement supérieure, à celle du liquide à traiter. Lorsque le liquide est admis par la ligne 2, un lit granulaire se forme au fond de l'enceinte (1) ou à la partie supérieure de celle-ci et les particules colloïdales y forment des agrégats. Lorsque l'alimentation en liquide à traiter est interrompue, le matériau granulaire remonte à la partie supérieure, respectivement inférieure de l'enceinte (1) et libère les agrégats formés, que l'on peut récupérer.

ACTORUM AG

Procédé de concentration d'une suspension de particules microscopiques, dispositif pour la mise en oeuvre de ce procédé et applications de celui-ci.

La présente invention concerne un procédé de concentration d'une suspension dans un liquide de particules microscopiques, ainsi qu'un dispositif pour la mise en oeuvre de ce procédé. Elle concerne également l'application de ce procédé à la collecte des particules vivantes en suspension dans les eaux douces, saumâtres ou salées, en particulier des microalgues constituant le phytoplancton et des animaux microscopiques constituant le zooplancton. L'invention concerne enfin l'application dudit procédé à l'épuration des eaux usées.

Dans sa demande de brevet français n°82 01589 du 1er février 1982, le Demandeur a rappelé l'intérêt économique considérable que présente la collecte des microalgues ou d'autres microorganismes vivants. Le coût des procédés usuels de concentration des liquides qui les contiennent et de récupération de ces particules à partir des concentrations ainsi réalisées est malheureusement très élevé.En outre, l'adjonction de réactifs chimiques en vue de floculer les produits désirés risque d'altérer les qualités qui rendent ces produits intéressants.

En vue de remédier à ces inconvénients, le Demandeur a proposé, dans la demande de brevet précitée, un procédé original de floculation des particules en suspension dans un liquide, qui ne nécessite pas de réactifs chimiques et qui peut être mis en oeuvre avec un rendement élevé, sans impliquer d'opérations ou d'appareillages coûteux.

L'inventeur a, en effet, établi que la traversée d'un milieu granulaire par une suspension des particules colloïdales s'accompagne d'une floculation plus ou moins irréversible des particules, intéressant une fraction variable du flux traité, suivant la nature des particules. Ce phénomène se produit en particulier de façon facilement observable avec des suspensions de microalgues ou encore sur les effluents des unités d'épuration biologique d'eaux usées (filtration tertiaire).

Selon la demande de brevet précitée, on fait passer un premier liquide comprenant des particules microscopiques en suspension à travers un milieu granulaire jusqu'à colmatage partiel ou complet dudit milieu granulaire par lesdites particules microscopiques, on décolmate au moins partiellement ledit milieu granulaire en le faisant traverser par un second liquide, circulant à une vitesse supérieure à celui-ci, et l'on récupère en aval dudit lit, dans le sens de passage desdits liquides, des agrégats floculés desdites particules microscopiques et un effluent de liquide, partiellement ou totalement libre desdites particules.

Le second liquide peut être identique au premier liquide et contenir des particules en suspension. Le milieu granulaire est avantageusement traversé de bas en haut par le premier et le second liquides et ce milieu granulaire peut demeurer en lit fixe ou subir une expansion d'au plus environ 30 % en volume pendant la mise en oeuvre du procédé.

Le mécanisme du procédé mentionné ci-dessus peut donc être résumé de la façon suivante:
- à partir d'un certain taux de colmatage du milieu granulaire, les particules microscopiques autofloculent, sans l'aide d'aucun agent chimique, au sein de ce milieu granulaire;

- pendant la phase de décolmatage, les agrégats ainsi formés sont entraînés par le liquide et libérés du milieu granulaire, à la surface duquel ils décantent, à condition, bien entendu, que la vitesse ascensionnelle du liquide soit inférieure à la vitesse d'entraînement de ces agrégats.

En fonctionnement continu, on maintient une légère expansion
du milieu granulaire, d'une façon telle que celui-ci présente une résistance suffisante au passage des particules
pour que celles-ci autofloculent et que, simultanément, ce
milieu soit suffisamment perméable pour que les agrégats
ainsi formés puissent le traverser et être libérés.

Dans ce but, dans la pratique, comme il est décrit dans la
demande de brevet antérieure, l'effluent liquide partiellement épuré est recyclé, au moins en partie, à l'alimentation
du milieu granulaire.

La présente invention vise à se libérer de cette sujétion et
à proposer un procédé basé sur le même phénomène que le procédé antérieur, mais dont le rendement est nettement supérieur à celui du précédent, sans avoir à recycler une fraction de l'effluent liquide.

A cet effet, l'invention a pour objet un procédé de concentration de particules microscopiques en suspension dans un
liquide, caractérisé en ce que l'on fait traverser audit
liquide, de haut en bas, une enceinte comprenant un fond, au
moins une entrée de liquide disposée à sa partie supérieure
et au moins une sortie de liquide disposée à sa partie inférieure, ladite enceinte contenant un milieu granulaire composé d'un matériau de masse spécifique inférieure à celle
dudit liquide, la vitesse dudit liquide dans ladite enceinte
étant  telle qu'il entraîne vers ledit fond, à lui seul ou
en combinaison avec un moyen auxiliaire tel qu'un piston,
les grains dudit matériau, afin qu'ils constituent un lit
granulaire dans lequel lesdites particules microscopiques
forment des agrégats, en ce que l'on interrompt l'alimentation de ladite enceinte en ledit liquide lorsque ledit lit granulaire est colmaté, en ce qu'on laisse lesdits grains de matériau remonter vers le haut de ladite enceinte sous l'effet de la poussée d'Archimède, éventuellement en leur imprimant une poussée complémentaire, de manière à libérer . lesdits agrégats, en ce qu'on laisse décanter lesdits agrégats, et en ce qu'on les récupère à la partie inférieure de ladite enceinte.

L'invention a également pour objet un procédé de concentration de particules microscopiques en suspension dans un liquide, caractérisé en ce que l'on fait traverser audit liquide, de bas en haut, une enceinte fermée à sa partie supérieure et comprenant un fond, au moins une entrée de liquide disposée à sa partie inférieure et au moins une sortie de liquide disposée à sa partie supérieure, ladite enceinte contenant un milieu granulaire en un matériau de masse spécifique supérieure à celle dudit liquide, la vitesse dudit liquide dans ladite enceinte étant telle qu'il entraîne vers la partie supérieure les grains dudit matériau afin qu'ils y forment un lit granulaire dans lequel lesdites particules microscopiques forment des agrégats, en ce que l'on interrompt l'alimentation de ladite enceinte en ledit liquide lorsque ledit lit granulaire est colmaté, en ce qu'on laisse lesdits grains de matériau se déposer par gravité au fond de ladite enceinte, éventuellement en leur imprimant une poussée complémentaire, de manière à libérer lesdits agrégats, en ce qu'on laisse décanter lesdits agrégats, et en ce qu'on les récupère à la partie inférieure de ladite enceinte.

L'invention a aussi pour objet un dispositif pour la mise en oeuvre du procédé défini ci-dessus, ce dispositif étant caractérisé en ce qu'il comprend une enceinte fermée à sa partie supérieure et munie d'un fond, d'au moins une entrée de liquide disposée à sa partie supérieure, respectivement inférieure, et d'au moins une sortie de liquide disposée à sa partie inférieure, respectivement supérieure, ladite enceinte contenant un milieu granulaire en un matériau de masse spécifique inférieure, respectivement supérieure, à celle dudit liquide.

Il va sans dire que le volume apparent dudit milieu granulaire doit être assez largement inférieure au volume interne de ladite enceinte.

Celle-ci pourra éventuellement comporter une partie inférieure cylindrique dans laquelle coulissera un organe formant piston, disposé au-dessus du milieu granulaire, en vue d'imprimer à celui-ci une poussée auxiliaire, tant vers le fond de l'enceinte que vers la partie supérieure. Dans ce cas, l'arrivée de liquide dans ladite enceinte se fera par l'intermédiaire dudit piston qui agira ainsi comme distributeur de liquide. Lors de la phase de colmatage du lit granulaire, celui-ci sera maintenu contre le fond par ledit piston, l'arrivée du liquide à traiter se faisant directement par le piston distributeur, tandis qu'au décolmatage, il suffira de soulever ledit piston, en aspirant simultanément du liquide traité à partir de la sortie du liquide.

L'invention a aussi pour objet l'application du procédé mentionné ci-dessus à la collecte de particules vivantes, notamment de microalgues, en suspension dans un liquide. L'absence de toute addition de produits chimiques ou de tout traitement physique complexe, dans le procédé de l'invention, permet en effet de récupérer les matières vivantes sans altération de leurs propriétés physico-chimiques.

L'invention a enfin pour objet l'application du procédé mentionné ci-dessus au traitement des eaux usées, éventuellement après un prétraitement de celles-ci. Dans cette application, le procédé selon l'invention est beaucoup moins coûteux que les traitements antérieurs, du fait de l'absence de tout réactif de floculation.

Dans une forme de mise en oeuvre particulièrement avantageuse du procédé de l'invention, la partie supérieure de l'enceinte où se rassemble le matériau granulaire, lorsque l'alimentation de liquide est interrompue, aura une section transversale nettement supérieure à celle de la partie inférieure de ladite enceinte. En effet, dans ce cas, les grains de matériau pourront remonter beaucoup plus facilement sous la poussée d'Archimède, en s'écartant les uns des autres de manière à libérer aisément les agrégats formés. L'enceinte pourra avoir, par exemple, la forme d'un cylindre vertical évasé en tronc de cône à sa partie supérieure ou muni d'une partie conique à sa base.

Naturellement, toute autre forme d'enceinte peut être envisagée sans sortir du cadre de l'invention et l'enceinte peut être inclinée au lieu d'être verticale.

L'alimentation en liquide à traiter est interrompue lorsque le lit granulaire formé à la base de l'enceinte est colmaté, c'est-à-dire lorsque la concentration en particules colloïdales de l'effluent est sensiblement égale à celle de l'alimentation, ou lorsque la perte de charge à travers le lit granulaire atteint une valeur prédéterminée, ou encore lorsque, empiriquement, on estime que la masse d'agrégats formés dans le lit granulaire atteint une valeur suffisante.

Ainsi qu'il a été dit ci-dessus, la poussée d'Archimède entraîne vers le haut les particules du lit granulaire lorsque l'alimentation en liquide est interrompue. Si la poussée d'Archimède est insuffisante, on peut exercer une poussée complémentaire, par exemple en alimentant l'enceinte en liquide, à courant ascendant à partir de sa base, ou encore en injectant un gaz à sa partie inférieure.

Les dessins schématiques annexés illustrent diverses formes de mise en oeuvre de l'invention. Sur ces dessins:

Les figures 1, 2 et 3 illustrent trois phases successives du procédé selon l'invention, mis en oeuvre dans une enceinte cylindrique;

Les figures 4 et 5 sont des vues analogues à la figure 3, dans le cas, respectivement, d'une enceinte cylindrique dont la partie supérieure s'évase vers l'extérieur en forme de tronc de cône et dont la partie inférieure a une forme conique.

La figure 6 est une vue analogue à la figure 2, dans le cas où l'enceinte cylindrique est équipée d'un piston distributeur de liquide, qui maintient le lit granulaire appliqué contre le fond de l'enceinte pendant la phase de colmatage;

La figure 7 est une vue analogue à la figure 6 dans le cas d'une enceinte du type de la figure 4.

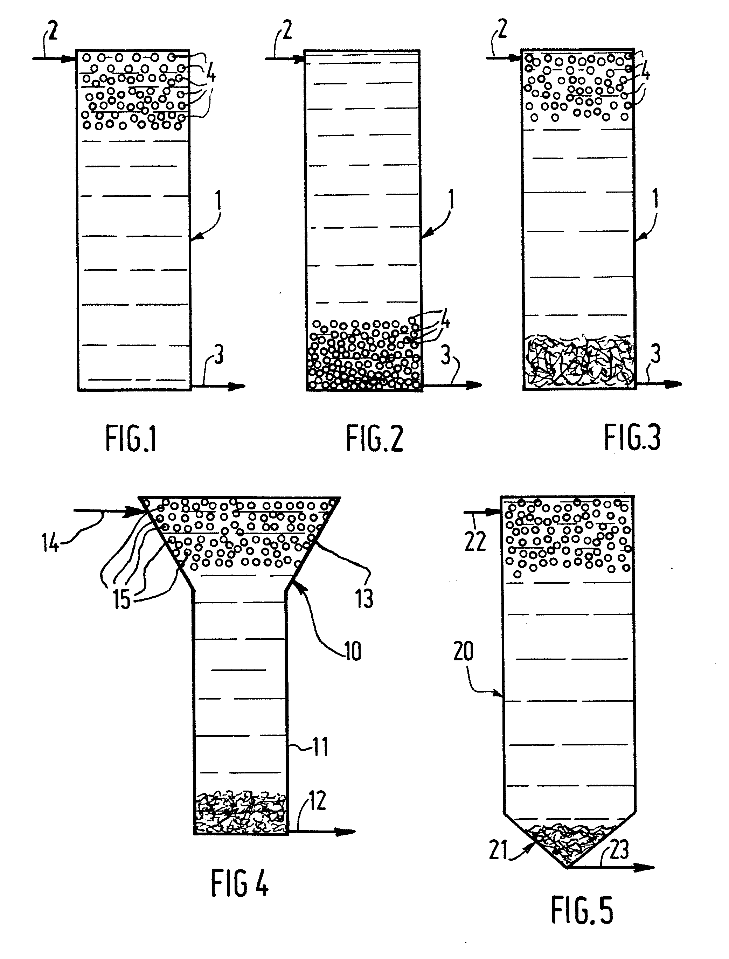

La figure 1 montre une enceinte cylindrique 1, à axe vertical, alimentée à sa partie supérieure en liquide à traiter par une ligne 2, tandis que le liquide traité est évacué à sa partie inférieure par une ligne 3.Cette enceinte contient des particules solides 4 d'un matériau d'une densité inférieure à celle du liquide à traiter et qui flottent donc à la partie supérieure de ce liquide lorsqu'il est au repos (figure 1).

Lorsque le liquide à traiter alimente l'enceinte 1 avec un débit suffisant, les particules 4 sont entraînées par le liquide vers le fond de l'enceinte, sur lequel elles se déposent en formant un lit granulaire que traverse le liquide avant d'être évacué par la ligne 3 (figure 2). Si la granulométrie des particules 4 est telle que le lit granulaire agit comme un filtre vis-à-vis du liquide, les particules colloïdales que contient celui-ci floculent dans le lit en formant des agrégats qui colmatent progressivement le lit granulaire.

Lorsque le colmatage a atteint un degré prédéterminé, il suffit d'arrêter l'alimentation en liquide pour que, sous l'effet de la poussée d'Archimède, les particules 4 remontent vers la partie supérieure de l'enceinte 1 (figure 3). En se détruisant, le lit granulaire libère les floculats qui s'y étaient formés et ceux-ci se déposent sur le fond de l'enceinte 1, où l'on peut les récupérer.

Dans le cas de microalgues, le milieu granulaire aura avantageusement une granulométrie comprise entre 2 et 5 mm et une masse volumique comprise entre 0,9 et 0,95 $g/cm^3$.

Toujours dans le cas de microalgues, la vitesse de passage du liquide à traiter dans ladite enceinte sera comprise entre 25 et 100 cm par heure, suivant la nature du matériau granulaire et celle des particules en suspension.

Dans le cas de microalgues, la masse des agrégats retenus varie assez peu en fonction de la granulométrie des particules 4 et il est donc possible d'utiliser des matériaux grossiers, dont la plus grande dimension est comprise entre 2 et 5 mm, ce qui constitue naturellement un avantage économique.

L'efficacité de la rétention des microalgues est néanmoins fortement dépendante de la vitesse du liquide dans l'enceinte. Une vitesse de 1m/h constitue un maximum, si l'on désire récupérer au moins 50 % des microalgues en suspension, alors qu'une vitesse de 0,5 m/h permet de récupérer plus de 70 % des microalgues. Naturellement, l'efficacité du procédé dépend de la concentration initiale du liquide en particules colloïdales.

Les pertes de charge maximum résultant du colmatage du lit granulaire sont faibles, par exemple de l'ordre de 40 mm de colonne d'eau par mètre de lit granulaire.

En vue de favoriser le mouvement des particules du lit granulaire, lorsqu'elles remontent sous l'effet de la poussée d'Archimède, et de libérer plus facilement les agrégats formés, il est préférable, comme il a été indiqué ci-dessus, que la partie supérieure de l'enceinte ait une section transversale supérieure à sa partie inférieure.

Ainsi, par exemple, dans le cas de la figure 4, l'enceinte 10 comprend un corps cylindrique 11, à la partie inférieure duquel est disposée la ligne 12 d'évacuation du liquide traité, et une partie supérieure 13, en forme de tronc de cône évasé vers l'extérieur, raccordée au corps 11 et alimentée en liquide à traiter par une ligne 14. De préférence, le volume de la partie tronconique 13 sera supérieur d'au moins 50 % au volume apparent du lit granulaire formé par les particules 15.

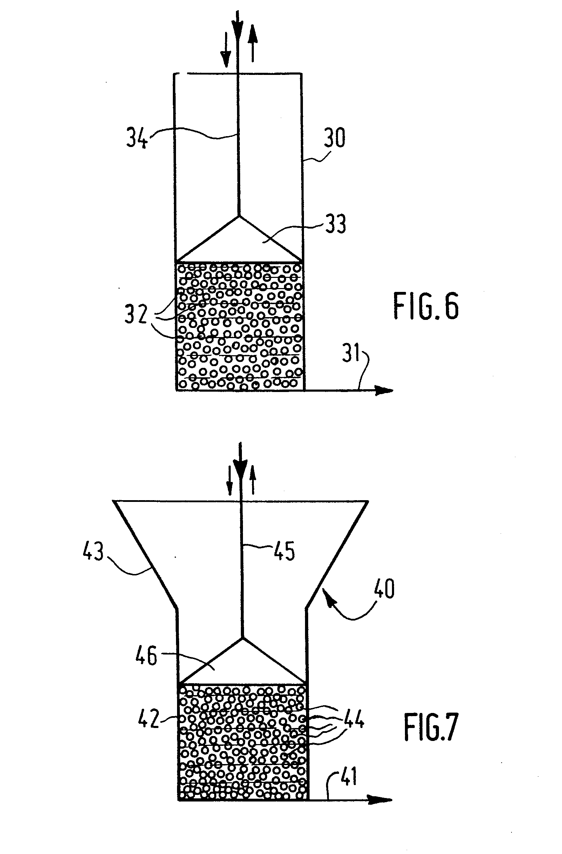

En variante, dans le cas de la figure 5, le corps cylindrique 20 de l'enceinte est raccordé à sa base à une partie de fond 21 de forme conique. Une ligne 22 alimente en liquide à traiter la partie supérieure du corps 20, tandis qu'une ligne 23 évacue vers l'extérieur le liquide traité, à partir de la partie 21.

Quelle que soit la forme de l'enceinte, les floculats qui décantent à sa partie inférieure peuvent être évacués par la ligne d'évacuation du liquide traité ou par un autre conduit débouchant à la base de l'enceinte.

De même, comme indiqué ci-dessus, on peut prévoir à la base de l'enceinte un conduit d'injection de liquide ou de gaz (ou utiliser dans ce but la ligne d'évacuation du liquide traité), en vue d'exercer une poussée complémentaire sur les particules du lit granulaire, en fin de traitement, au cas où la poussée d'Archimède se révèlerait insuffisante pour faire remonter ces particules et libérer les floculats.

0152711

- 10 -

Il se peut toutefois que, compte tenu de la faible vitesse de passage du liquide à traiter à travers l'enceinte, le débit de liquide soit insuffisant au début du processus de colmatage pour entraîner les particules de solide formant filtre vers le fond de l'enceinte. Dans ce cas, il sera nécessaire d'utiliser un moyen mécanique auxiliaire formant piston pour repousser les particules vers le fond et les y maintenir en position, ce moyen étant remonté vers le haut de l'enceinte lors du décolmatage du lit granulaire et exerçant alors sur les particules un effort d'entraînement qui vient s'ajouter à la poussée d'Archimède.

Un dispositif de ce type est représenté sur les figures 6 et 7.

Sur la figure 6, on retrouve une enceinte cylindrique verticale 30, munie à sa base d'une évacuation de liquide 31 et contenant des particules 32 d'un solide de masse spécifique inférieure à celle du liquide à traiter. Dans cette enceinte 30 est monté coulissant, sous l'effet d'un moyen moteur non représenté, un piston 33 de section égale à la section interne du cylindre et par la tige creuse 34 duquel arrive le liquide à traiter,qui est refoulé vers le fond de l'enceinte par des orifices (non représentés) ménagés dans la face du piston 33 tournée vers le fond. En début de traitement du liquide chargé de la suspension colloïdale, le piston 33 est abaissé vers le fond de l'enceinte 30 et applique contre celui-ci les particules 32, qui, pendant toute la durée du traitement sont maintenues tassées entre le piston et le fond pour y former un lit granulaire. L'alimentation en liquide à traiter s'effectue par les orifices de la face inférieure de piston 33 et le liquide pénètre directement dans le lit granulaire.

Lorsque celui-ci est colmaté, l'alimentation en liquide à traiter est interrompue et le piston 33 est remonté vers le haut de l'enceinte. Dans son déplacement, il entraîne les particules 32 et aspire du liquide par le conduit 31, ce qui favorise le décolmatage du lit granulaire.

La figure 7 représente un dispositif analogue dans le cas d'une enceinte 40 munie à sa base d'un conduit d'évacuation 41 et comprenant une partie inférieure cylindrique 42 et une partie supérieure 43 en forme de tronc de cône évasé vers le haut. L'enceinte 40 contient des particules 44 d'un solide de densité inférieure à celle du liquide à traiter. Comme précédemment, celui-ci circule dans la tige creuse 45 d'un piston 46 de section égale à celle de la partie cylindrique 42 de l'enceinte et est évacué par des orifices (non représentés) de la face de ce piston tournée vers le fond de l'enceinte. Le piston 46 est apte à se déplacer dans les deux sens du haut au bas de l'enceinte 40 sous l'effet de moyens moteurs non représentés.

Au début du traitement, lorsque le piston 46 est en haut de la partie évasée 43 de l'enceinte, il suffit d'attendre que les particules 44 sous la seule poussée du liquide à traiter pénètrent dans la partie cylindrique 42, pour abaisser ensuite le piston 46 en direction du fond de cette enceinte. Le traitement se poursuit ensuite de la manière décrite en relation avec la figure 6.

Bien entendu, on pourrait utiliser tout autre type de système à piston sans sortir du cadre de l'invention.

On ne sortirait pas davantage du cadre de l'invention en utilisant un lit granulaire composé d'un matériau de densité supérieure à celle du liquide à traiter et en alimentant la colonne à sa base avec une vitesse telle que le milieu granulaire soit transporté et plaqué au sommet de ladite colonne où est évacué le liquide traité. Pendant la phase de décolmatage, à l'arrêt de l'alimentation, le lit granulaire se dépose par gravité et libère les particules qui se sont agglomérées.

Le dispositif conforme à l'invention peut servir à concentrer n'importe quel type de suspension, même en l'absence du phénomène de floculation, le lit granulaire agissant alors à la manière d'un simple filtre. Il est cependant particulièrement approprié aux suspensions de particules se prêtant à une floculation et c'est ainsi que, dans le cas de microalgues, en utilisant une enceinte d'un volume de 25 litres, contenant un volume apparent de 4 litres de particules de polyéthylène, d'une granulométrie de 2 à 3 mm, il est possible, avec un débit de 40 l/h, de passer, au bout de 5 jours de traitement, d'une concentration initiale de 200 mg/l à une concentration finale d'environ 100 g/l, soit un taux de concentration d'environ 500.

On obtient des résultats aussi avantageux dans l'application du procédé selon l'invention à l'épuration des eaux usées en l'absence de tout floculant ou autre réactif chimique.

L'invention concerne donc un procédé et un appareil générateurs et un gradient hydraulique entraînant la floculation de suspension colloïdale. Pour des eaux usées et des suspensions de microalgues, il s'agit d'une autofloculation sans ajout de réactifs. Dans certains cas, cependant, il peut être avantageux d'ajouter des réactifs chimiques ou biologiques pouvant aider au phénomène d'agrégation et de constitution de flocons.

On ne sortirait donc pas du cadre de l'invention en appliquant le procédé et le dispositif décrits ci-dessus au traitement d'eaux usées ou d'autres liquides contenant des particules microscopiques en suspension, auxquels ont été ajoutés des réactifs connus dans la technique.

## Revendications

1. Procédé de concentration de particules microscopiques
en suspension dans un liquide, caractérisé en ce que l'on
fait traverser audit liquide, de haut en bas, une enceinte
(1) comprenant un fond, au moins une entrée de liquide (2)
disposée à sa partie supérieure et au moins une sortie de
liquide (3) disposée à sa partie inférieure, ladite enceinte
contenant un milieu granulaire (4) en un matériau de masse
spécifique inférieure à celle dudit liquide, la vitesse
dudit liquide dans ladite enceinte (1) étant telle qu'il
entraîne vers ledit fond, à lui seul ou en combinaison avec
un moyen auxiliaire tel qu'un piston (33, 46), les grains
dudit matériau afin qu'ils constituent un lit granulaire
dans lequel lesdites particules microscopiques forment des
agrégats, en ce que l'on interrompt l'alimentation de ladite
enceinte (1) en ledit liquide lorsque ledit lit granulaire
est colmaté, en ce qu'on laisse lesdits grains (4) de matériau remonter vers le haut de ladite enceinte sous l'effet
de la poussée d'Archimède, éventuellement en leur imprimant
une poussée complémentaire, de manière à libérer lesdits
agrégats, en ce qu'on laisse décanter lesdits agrégats, et
en ce que les récupère à la partie inférieure de ladite
enceinte.

2. Procédé de concentration de particules microscopiques en
suspension dans un liquide, caractérisé en ce que l'on fait
traverser audit liquide, de bas en haut, une enceinte fermée
à sa partie supérieure comprenant un fond, au moins une entrée de liquide disposée à sa partie inférieure et au moins
une sortie de liquide disposée à sa partie supérieure, ladite enceinte contenant un milieu granulaire en un matériau
de masse spécifique supérieure à celle dudit liquide, la
vitesse dudit liquide dans ladite enceinte étant telle qu'il
entraîne vers la partie supérieure les grains dudit matériau
afin qu'ils y forment un lit granulaire dans lequel lesdites particules microscopiques forment des agrégats, en ce que l'on interrompt l'alimentation de ladite enceinte en ledit liquide lorsque ledit lit granulaire est colmaté, en ce qu'on laisse lesdits grains de matériau se déposer par gravité au fond de ladite enceinte, éventuellement en leur imprimant une poussée complémentaire, de manière à libérer lesdits agrégats, en ce qu'on laisse décanter lesdits agrégats, et en ce qu'on les récupère à la partie inférieure de ladite enceinte.

3. Procédé selon l'une des revendications 1 et 2, dans lequel ladite enceinte (30, 40) est équipée d'un moyen auxiliaire tel qu'un piston (33, 46) pour refouler lesdites particules solides (32, 44) dans le sens d'écoulement du liquide à traiter, caractérisé en ce que l'alimentation en liquide à traiter de ladite enceinte s'effectue à travers au moins un orifice ménagé dans la face dudit piston tournée vers le fond de ladite enceinte.

4. Dispositif pour la mise en oeuvre du procédé selon la revendication 1, caractérisé en ce qu'il comprend une enceinte (1) munie d'un fond, d'au moins une entrée de liquide (2) disposée à sa partie supérieure et d'au moins une sortie de liquide (3) à sa partie inférieure, ladite enceinte contenant un milieu granulaire (4) en un matériau de masse spécifique inférieure à celle dudit liquide.

5. Dispositif selon la revendication 4, caractérisé en ce que la partie supérieure de ladite enceinte a une section supérieure à celle de sa partie inférieure.

6. Dispositif selon la revendication 5, caractérisé en ce que ladite enceinte (10, 40) comprend un corps cylindrique (11, 42) se prolongeant vers le haut par un tronc de cône (13, 43) évasé vers l'extérieur.

0152711

- 15 -

7. Dispositif selon la revendication 5, caractérisé en ce que ladite enceinte comprend un corps cylindrique (20) dont la partie inférieure a la forme d'un cône (21).

8. Dispositif pour la mise en oeuvre du procédé selon la revendication 2, caractérisé en ce qu'il comprend une enceinte fermée à sa partie supérieure et munie d'un fond, d'au moins une entrée de liquide (2) disposée à sa partie inférieure et d'au moins une sortie de liquide (3) à sa partie supérieure, ladite enceinte contenant un milieu granulaire (4) en un matériau de masse spécifique inférieure à celle dudit liquide.

9. Dispositif selon l'une des revendications 4 à 8, caractérisé en ce qu'il comporte un moyen auxiliaire (33, 46) formant un piston mobile sous l'action de moyens moteurs pour repousser lesdites particules solides (32, 44) dans le sens d'écoulement dudit liquide.

10. Dispositif selon la revendication 9, caractérisé en ce que l'alimentation en liquide à traiter de ladite enceinte s'effectue à travers au moins un orifice ménagé dans la face dudit piston (33, 46) tournée vers le fond de l'enceinte.

11. Dispositif selon la revendication 10, caractérisé en ce que l'alimentation en liquide dudit piston (33, 46) s'effectue par l'intermédiaire de la tige creuse (34, 45) dudit piston.

12. Application du procédé selon l'une des revendications 1 à 3 ou d'un dispositif selon l'une des revendications 4 à 11, à la collecte de particules vivantes en suspension dans l'eau, notamment de microalgues.

13. Application selon la revendication 12, caractérisée en ce que la vitesse de passage du liquide à traiter dans ladite enceinte est comprise entre 20 et 100 cm/heure.

14. Application selon l'une des revendications 12 et 13, caractérisée en ce que la granulométrie du milieu granulaire est comprise entre 2 et 5 mm.

15. Application du procédé selon les revendications 1 à 3, ou d'un dispositif selon l'une des revendications 4 à 11, à l'épuration des eaux usées.

16. Application selon la revendication 15, caractérisée en ce que lesdites eaux ne comportent pas de réactif chimique de floculation.

FIG.1     FIG.2     FIG.3

FIG 4     FIG.5

FIG.6

34    30
33
32    31

FIG.7

43    45
40
46
42    44
41